(19) Europäisches Patentamt
European Patent Office
Office européen des brevets

(11) **EP 4 495 276 A1**

(12) **EUROPEAN PATENT APPLICATION**
published in accordance with Art. 153(4) EPC

(43) Date of publication:
**22.01.2025 Bulletin 2025/04**

(21) Application number: 23770819.3

(22) Date of filing: **15.03.2023**

(51) International Patent Classification (IPC):
**C21D 8/12** (2006.01)      **C22C 38/00** (2006.01)
**C22C 38/60** (2006.01)      **H01F 1/147** (2006.01)

(52) Cooperative Patent Classification (CPC):
**C21D 8/12; C22C 38/00; C22C 38/60; H01F 1/147;**
**Y02P 10/20**

(86) International application number:
**PCT/JP2023/009983**

(87) International publication number:
**WO 2023/176866 (21.09.2023 Gazette 2023/38)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **15.03.2022  JP 2022039815**

(71) Applicant: NIPPON STEEL CORPORATION
**Chiyoda-ku**
**Tokyo 100-8071 (JP)**

(72) Inventors:
• YASHIKI, Hiroyoshi
**Tokyo 100-8071 (JP)**
• NATORI, Yoshiaki
**Tokyo 100-8071 (JP)**
• TAKEDA, Kazutoshi
**Tokyo 100-8071 (JP)**
• TANAKA, Ichiro
**Tokyo 100-8071 (JP)**
• HORI, Hiroki
**Tokyo 100-8071 (JP)**

(74) Representative: Vossius & Partner
**Patentanwälte Rechtsanwälte mbB**
**Siebertstrasse 3**
**81675 München (DE)**

(54) **NON-ORIENTED ELECTROMAGNETIC STEEL SHEET AND METHOD FOR MANUFACTURING SAME**

(57)    Provided is a non-oriented electrical steel sheet including a base metal having a chemical composition containing, by mass %, C: 0.0050% or less, Si: more than 3.70% and 4.60% or less, Mn: more than 0.20% and 0.50% or less, Al: 0.23-0.75%, P: 0.030% or less, S: 0.0018% or less, N: 0.0040% or less, Sn: 0.005-0.040%, Sb: 0-0.040%, with a balance of Fe and impurities, and satisfying $[4.2 \leq Si+Al+0.5 \times Mn \leq 4.9]$, wherein [N]s, an N content from the surface to 20 $\mu$m in depth of the base metal, is 0.0060% or less, an average crystal grain size of the base metal is 50 to 120 $\mu$m, a saturation magnetic flux density is 1.945T or more, a tensile strength is 600 MPa or more, and a sheet thickness is 0.10 to 0.30 mm.

EP 4 495 276 A1

**Description**

TECHNICAL FIELD

The present invention relates to a non-oriented electrical steel sheet and a method for producing the same.

BACKGROUND ART

In recent years, global environmental issues have been attracting attention, and demands for energy conservation efforts have been increasing. In particular, there is a strong demand for more efficiency in electrical equipment. For this reason, there is a growing demand for improved magnetic properties in non-oriented electrical steel sheets, which are widely used as iron core materials for motors, generators, and the like. This is especially true for drive motors for electric and hybrid vehicles and motors for air conditioning compressors.

A motor core of various motors as described above consists of a stator, which is a stationary element, and a rotor, which is a moving element. The stator requires excellent magnetic properties (low iron loss and high magnetic flux density), especially low iron loss and high saturation magnetic flux density, while the rotor requires excellent mechanical properties

Since characteristics required for the stator and the rotor are different, desired characteristics can be achieved by producing different types of non-oriented electrical steel sheets for the stator and the rotor. However, producing two types of non-oriented electrical steel sheets will result in a decrease in yield. Therefore, in order to achieve high strength required for rotors and low iron loss required for stators, non-oriented electrical steel sheets with excellent strength and magnetic properties have been studied in the past.

For example, attempts have been made to achieve excellent magnetic properties and high strength in Patent Documents 1 to 4.

LIST OF PRIOR ART DOCUMENTS

PATENT DOCUMENT

Patent Document 1: WO 2019/017426 A1

Patent Document 2: WO 2020/091039 A1

Patent Document 3: WO 2020/091043 A1

Patent Document 4: JP2010-90474 A

SUMMARY OF INVENTION

TECHNICAL PROBLEM

However, in order to commercialize a non-oriented electrical steel sheet having both high strength and low iron loss, it is necessary to include a large amount of alloying elements, as disclosed in Patent Documents 1-4, which results in a decrease in toughness and a tendency to fracture during cold rolling. In addition, high alloying may cause a decrease in saturation magnetic flux density.

The present invention was made to solve these problems and an objective of the present invention is to provide a non-oriented electrical steel sheet having high strength and excellent magnetic properties in a stable manner.

SOLUTION TO PROBLEM

The gist of the present invention is the following non-oriented electrical steel sheet and method for producing the same.

(1) A non-oriented electrical steel sheet including a base metal having a chemical composition containing, by mass %,

C: 0.0050% or less,
Si: more than 3.70% and 4.60% or less,

Mn: more than 0.20% and 0.50% or less,
Al: 0.23 to 0.75%,
P: 0.030% or less,
S: 0.0018% or less,
N: 0.0040% or less,
Ti: less than 0.0050%,
Nb: less than 0.0050%,
Zr: less than 0.0050%,
V: less than 0.0050%,
Cu: less than 0.200%,
Ni: less than 0.500%,
Sn: 0.005 to 0.040%, and
Sb: 0 to 0.040%,
with a balance of Fe and impurities, and
satisfying the Formula (i) below, wherein:

[N]s, an N content from a surface to 20 $\mu$m in depth of the base metal, is 0.0060% or less,
an average crystal grain size of the base metal is 50 to 120 $\mu$m,
a saturation magnetic flux density is 1.945T or more,
a tensile strength is 600 MPa or more, and
a sheet thickness is 0.10 to 0.30 mm:

$$4.2 \leq Si + Al + 0.5 \times Mn \leq 4.9 \quad ..... \text{(i)}$$

where, element symbols in the above Formula (i) represent contents (by mass %) of each element.

(2) The non-oriented electrical steel sheet described in (1) above, wherein the steel sheet incudes an insulating coating on a surface of the base metal.
(3) A method for producing the non-oriented electrical steel sheet described in (1) or (2) above,
the method including:

a hot rolling process,
a pickling process,
a batch-type hot-band annealing process performed at a soaking temperature of 650 to 780°C for a soaking time of 8 to 36 hours,
a cold rolling process to reduce a sheet thickness to 0.10 to 0.30 mm, and
a final annealing process at a soaking temperature of 880 to 1020°C for a soaking time of 1 second to 10 minutes,
wherein the hot rolling process, the pickling process, the hot-band annealing process, the cold rolling process, and the final annealing process are sequentially performed on a steel ingot having a chemical composition containing, by mass %,
C: 0.0050% or less,
Si: more than 3.70% and 4.60% or less,
Mn: more than 0.20% and 0.50% or less,
Al: 0.23 to 0.75%,
P: 0.030% or less,
S: 0.0018% or less,
N: 0.0040% or less,
Ti: less than 0.0050%,
Nb: less than 0.0050%,
Zr: less than 0.0050%,
V: less than 0.0050%,
Cu: less than 0.200%,
Ni: less than 0.500%,
Sn: 0.005 to 0.040%, and
Sb: 0 to 0.040%,
with a balance of Fe and impurities, and
satisfying the Formula (i) below:

$$4.2 \leq Si + Al + 0.5 \times Mn \leq 4.9 \ldots. (i)$$

where, element symbols in the above formula represent contents (mass %) of each element.

ADVANTAGEOUS EFFECTS OF INVENTION

According to the present invention, a non-oriented electrical steel sheet having high strength and excellent magnetic properties can be obtained.

DESCRIPTION OF EMBODIMENTS

The present inventors have made the following findings as a result of the diligent study to solve the above problems.

In order to achieve high strength, low iron loss, and high saturation magnetic flux density while ensuring toughness during cold rolling, it is necessary to optimize the contents of Si, Mn, and Al, which are main alloying elements.

Specifically, Si, which has the highest solid solution strengthening ability and the highest contribution to an increase in electrical resistance, is to be contained at more than 3.70% and 4.60% or less. In addition, in order to obtain good crystal grain growth, Al is to be contained at 0.23% or more. On the other hand, the Al content is to be 0.75% or less in order to suppress deterioration of the saturation magnetic flux density. In addition, Mn, which has the lowest solid solution strengthening ability among the three elements but contributes to an increase in electrical resistance with little degradation in toughness, is to be contained at more than 0.20%.

As a result of repeated studies by the present inventors, it has been found that when a surface layer of the steel sheet is nitrided, the iron loss deteriorates. Although the mechanism is not clear, it has been found that Mn affects nitriding of the surface layer of the steel sheet. In order to suppress the deterioration of iron loss due to the nitriding of the surface layer of the steel sheet, the Mn content is to be 0.50% or less. In addition, it has also been found that Sn has an effect of suppressing the nitriding of the surface layer of the steel sheet. Therefore, Sn is to be contained at 0.005 to 0.040%.

In a general continuous hot-band annealing process, a hot rolled steel sheet with scale is placed in an annealing furnace, which produces scale that is difficult to remove by pickling after annealing, requiring mechanical descaling such as shot blasting prior to pickling. However, for high-alloy steels such as those mentioned above, shot blasting causes deformation twinning on the surface of the steel sheet, and the deformation twinning can easily lead to problems such as sheet fracture and edge cracking during cold rolling.

In the present invention, a hot rolled steel sheet is pickled before hot-band annealing, and then annealed in a batch-type furnace. Since the scale on the hot rolled steel sheet can be easily removed by pickling, no shot is required and no deformation twinning occurs. As a result, good toughness is ensured even in high-alloy steel, and occurrence of problems such as sheet fracture and edge cracking during cold rolling can be suppressed.

The present invention has been made based on the above findings. Each requirement of the present invention is described in detail below.

1. Overall Configuration

The non-oriented electrical steel sheet of an embodiment of the present invention is suitable for both stators and rotors due to its high strength and excellent magnetic properties. In addition, the non-oriented electrical steel sheet of an embodiment of the present invention is preferably provided with an insulating coating described below on a surface of the base metal.

2. Chemical Composition of Base Metal

The reasons for the limitation of each element are as follows. In the following explanation, "%" for content means "mass percent."

C: 0.0050% or less

C (carbon) is an element that deteriorates the iron loss of the non-oriented electrical steel sheet. The C content of more than 0.0050% deteriorates the iron loss of the non-oriented electrical steel sheet, and desirable magnetic properties cannot be obtained. Therefore, the C content is to be 0.0050% or less. The C content is preferably 0.0040% or less, more preferably 0.0035% or less, and even more preferably 0.0030% or less. Since C contributes to high strength of the non-oriented electrical steel sheet, the C content is preferably 0.0005% or more, and more preferably 0.0010% or more, when this effect is to be obtained.

Si: more than 3.70% and 4.60% or less

Si (silicon) is an element that increases the electrical resistance of steel to reduce an eddy current loss and improve a high-frequency iron loss of the non-oriented electrical steel sheet. Si is also an effective element for increasing the strength of the non-oriented electrical steel sheet due to its high solid solution strengthening ability. To achieve these effects, the Si content is to be more than 3.70%. The Si content is preferably 3.80% or more, more preferably 3.90% or more, and even more preferably 4.00% or more. On the other hand, if the Si content is excessive, workability deteriorates significantly, and it becomes difficult to perform cold rolling. Therefore, the Si content is to be 4.60% or less. The Si content is preferably 4.50% or less, more preferably 4.40% or less.

Mn: more than 0.20% and 0.50% or less

Mn (manganese) is an effective element to increase the electrical resistance of steel to reduce the eddy current loss and improve the high-frequency iron loss of the non-oriented electrical steel sheet. In addition, if the Mn content is too low, the effect of increasing the electrical resistance is small and the iron loss deteriorates due to the precipitation of fine sulfides (MnS) in the steel. Therefore, the Mn content is to be more than 0.20%. The Mn content is preferably 0.25% or more, and more preferably 0.30% or more. On the other hand, if the Mn content is excessive, the nitriding of the surface layer of the steel sheet becomes excessive and the iron loss deteriorates. Therefore, the Mn content is to be 0.50% or less. The Mn content is preferably 0.45%, and more preferably 0.40% or less.

Al: 0.23 to 0.75%

Al (aluminum) is an element that has an effect of reducing the eddy current loss by increasing the electrical resistance of steel and improving the high-frequency iron loss of the non-oriented electrical steel sheet. Al also has an effect of improving the iron loss by improving texture of the steel sheet. In addition, Al is an element that contributes to higher strength of the non-oriented electrical steel sheet through solid solution strengthening, although not to the same extent as Si. Furthermore, the addition of a suitable amount of Al has an effect of suppressing refinement of A1N, which is caused by Al combining with N in the steel, improving crystal grain growth during final annealing, and suppressing the deterioration of iron loss caused by fine A1N itself.
To achieve these effects, the Al content is to be 0.23% or more. The Al content is preferably 0.25% or more, and more preferably 0.27% or more. The above-mentioned nitriding of the surface layer of the steel sheet is more likely to occur at a higher Al content. As a result, the iron loss deteriorates. However, in the present invention, the nitriding of the surface layer of the steel sheet can be suppressed even at a high Al content by controlling the contents of Mn and Sn. Therefore, the effect of the present invention is more exerted when the Al content is high. That is, the effect of the present invention is more exerted when the Al content is, for example, more than 0.45%, or 0.47% or more. On the other hand, when the Al content is excessive, the toughness deteriorates and a risk of fracture during cold rolling increases. Therefore, the Al content is to be 0.75% or less. The Al content is preferably 0.70% or less, and more preferably 0.65% or less.
In the present embodiment, the electrical resistance of the steel is ensured by appropriately controlling the contents of Si, Al, and Mn. It is also necessary to appropriately control the contents of Si, Al, and Mn from the viewpoint of ensuring strength. On the other hand, an upper limit is also necessary from the viewpoint of ensuring saturation magnetic flux density and toughness. Therefore, in addition to the contents of Si, Al, and Mn being within the above ranges, the following Formula (i) must be satisfied. The value of the middle part of the following Formula (i) is preferably 4.3 or more, and more preferably 4.4 or more; the value is preferably 4.8 or less, and more preferably 4.7 or less.

$$4.2 \leq \ Si + Al + 0.5 \times Mn \leq \ 4.9 \ \ldots\ldots \ (i)$$

Here, the element symbols in the above formula represent the contents (mass %) of each element.

P: 0.030% or less

P (phosphorus) is contained in steel as an impurity, and its excessive content significantly reduces the toughness of the non-oriented electrical steel sheet. Therefore, the P content is to be 0.030% or less. The P content is preferably 0.025% or less, and more preferably 0.020% or less. Since an extreme reduction of the P content may cause an increase in producing cost, the P content is preferably 0.003% or more, and more preferably 0.005% or more.

S: 0.0018% or less

S (sulfur) is an element that increases the iron loss by forming fine precipitates of MnS and degrades the magnetic properties of the non-oriented electrical steel sheet. Therefore, the S content is to be 0.0018% or less. The S content is preferably 0.0016% or less, and more preferably 0.0014% or less. Since an extreme reduction of the S content may cause an increase in producing cost, the S content is preferably 0.0001% or more, more preferably 0.0003% or more, and even more preferably 0.0005% or more.

N: 0.0040% or less

N (nitrogen) is an element unavoidably mixed in steel and forms nitrides, which increase the iron loss and deteriorate the magnetic properties of the non-oriented electrical steel sheet. Therefore, the N content is to be 0.0040% or less. The N content is preferably 0.0030% or less, and more preferably 0.0020% or less. Since an extreme reduction of the N content may cause an increase in producing cost, it is preferable for the N content to be 0.0005% or more.

Ti: less than 0.0050%

Ti (titanium) is an element mixed unavoidably into steel and can combine with carbon or nitrogen to form precipitates (carbides and nitrides). When carbides or nitrides are formed, these precipitates themselves degrade the magnetic properties of the non-oriented electrical steel sheet. In addition, they impair crystal grain growth during final annealing, thereby degrading the magnetic properties of the non-oriented electrical steel sheet. Therefore, the Ti content is to be less than 0.0050%. The Ti content is preferably 0.0040% or less, more preferably 0.0030% or less, and even more preferably 0.0020% or less. Since an extreme reduction of the Ti content may cause an increase in producing cost, it is preferable that the Ti content be 0.0005% or more.

Nb: less than 0.0050%

Nb (niobium) is an element that contributes to high strength by combining with carbon or nitrogen to form precipitates (carbides and nitrides), but these precipitates themselves degrade the magnetic properties of the non-oriented electrical steel sheet. Therefore, the Nb content is to be less than 0.0050%. The Nb content is preferably 0.0040% or less, more preferably 0.0030% or less, and even more preferably 0.0020% or less. Since an extreme reduction of the Nb content may cause an increase in producing cost, it is preferable that the Nb content be 0.0001% or more.

Zr: less than 0.0050%

Zr (zirconium) is an element that contributes to high strength by combining with carbon or nitrogen to form precipitates (carbides and nitrides), but these precipitates themselves degrade the magnetic properties of the non-oriented electrical steel sheet. Therefore, the Zr content is to be less than 0.0050%. The Zr content is preferably 0.0040% or less, more preferably 0.0030% or less, and even more preferably 0.0020% or less. Since an extreme reduction of the Zr content may cause an increase in producing cost, it is preferable for the Zr content to be 0.0001% or more.

V: less than 0.0050%

V (vanadium) is an element that contributes to high strength by combining with carbon or nitrogen to form precipitates (carbides and nitrides), but these precipitates themselves degrade the magnetic properties of the non-oriented electrical steel sheet. Therefore, the V content is to be less than 0.0050%. The V content is preferably 0.0040% or less, more preferably 0.0030% or less, and even more preferably 0.0020%. Since an extreme reduction of the V content may cause an increase in producing cost, it is preferable for the V content to be 0.0001% or more.

Cu: less than 0.200%

Cu (copper) is an element that is mixed into steel unavoidably. Intentional inclusion of Cu increases the producing cost of the non-oriented electrical steel sheet. Therefore, in the present embodiment, Cu does not need to be actively included, and may be included at an impurity level. The Cu content is to be less than 0.200%, which is a maximum value that may be unavoidably mixed in a producing process. The Cu content is preferably 0.150% or less, and more preferably 0.100% or less. The lower limit of the Cu content is not particularly limited, but an extreme reduction of the Cu content may cause an increase in producing cost. Therefore, the Cu content is preferably 0.001% or more, more preferably 0.003% or more, and even more preferably 0.005% or more.

Ni: less than 0.500%

Ni (nickel) is an element that is mixed in steel unavoidably. However, since Ni is also an element that improves the strength of the non-oriented electrical steel sheet, it may be intentionally included. However, since Ni is expensive, the Ni content is to be less than 0.500%. The Ni content is preferably 0.400% or less, and more preferably 0.300% or less. A lower limit of the Ni content is not particularly limited, but an extreme reduction of the Ni content may cause an increase in producing cost. Therefore, the Ni content is preferably 0.001% or more, more preferably 0.003% or more, and even more preferably 0.005% or more. In the case of intentional inclusion, the Ni content is preferably 0.200% or more.

Sn: 0.005 to 0.040%

Sn (tin) is an element useful for ensuring low iron loss in the non-oriented electrical steel sheet by segregating on the surface of the base metal and suppressing oxidation and nitriding during annealing. Sn also has effects of increasing the magnetic flux density of the non-oriented electrical steel sheet by segregating at grain boundaries and improving the texture. To achieve these effects, the Sn content is to be 0.005% or more. The Sn content is preferably 0.010% or more, and more preferably 0.015% or more. On the other hand, if the Sn content is excessive, the toughness of the steel decreases, and it becomes difficult to perform cold rolling. Therefore, the Sn content is to be less than 0.040%. The Sn content is preferably less than 0.035%, and more preferably less than 0.030%.

Sb: 0 to 0.040%

Sb (antimony), like Sn, segregates on the surface of the base metal and suppresses the oxidation and nitriding during annealing, and is a useful element for ensuring low iron loss in the non-oriented electrical steel sheet. Sb also has the effect of increasing the magnetic flux density of the non-oriented electrical steel sheet by segregating in the grain boundaries and improving the texture. Therefore, Sb may be included as required. However, an excessive Sb content may reduce the toughness of the steel and make cold rolling difficult. Therefore, the Sb content is to be 0.040% or less. The Sb content is preferably 0.030% or less. To ensure the above effects, the Sb content is preferably 0.005% or more, and more preferably 0.010% or more.

In the chemical composition of the base metal of the non-oriented electrical steel sheet of the present invention, the balance is Fe and impurities. The term "impurities" herein means the components that are mixed in during the industrial manufacture of steel due to various factors in the raw materials and the producing process, such as ores, scrap, and other raw materials, and which are acceptable to the extent that they do not adversely affect the present invention.

Note that the contents of Cr and Mo as impurity elements are not specified. In the non-oriented electrical steel sheet of the present embodiment, the contents of these elements in a range of 0.5% or less, respectively, do not particularly affect the properties of the non-oriented electrical steel sheet of the present embodiment. Ca and Mg contained in a range of 0.002% or less, respectively, do not particularly affect the properties of the non-oriented electrical steel sheet of the present embodiment. Even if rare earth elements (REM) are contained in a range of 0.004% or less, there is no particular effect on the properties of the non-oriented electrical steel sheet of the present embodiment. Note that in the present embodiment, REM refers to a total of 17 elements consisting of Sc, Y, and lanthanides, and that the above REM content refers to the total content of these elements.

O (oxygen) is also an impurity element, but its inclusion in a range of 0.035% or less does not affect the properties of the non-oriented electrical steel sheet of the present embodiment. Since O may be mixed into the steel in the annealing process, the O content of 0.010% or less at the slab stage (i.e., ladle value) does not particularly affect the properties of the non-oriented electrical steel sheet of the present embodiment.

In addition to the above elements, elements such as Pb, Bi, As, B, and Se may be included as impurity elements, but if the content of each is within a range of 0.0050% or less, the characteristics of the non-oriented electrical steel sheet of the present embodiment are not impaired.

Various known measurement methods are available for the chemical composition of the base metal of the non-oriented electrical steel sheet of the present embodiment. For example, it can be measured by ICP optical emission spectrometry, gravimetric analysis, or spark discharge optical emission spectrometry. C and S can be measured by infrared absorption method after combustion, N by inert gas fusion thermal conductivity method, and O by inert gas fusion non-dispersive infrared absorption method.

Furthermore, in the non-oriented electrical steel sheet of the present embodiment, $[N]_S$ denoting an N content from the surface of the base metal to 20 $\mu$m in a depth direction is to be 0.0060% or less from the viewpoint of suppressing the nitriding of the surface layer of the steel sheet. If the $[N]_S$ is 0.0060% or less, it is possible to suppress the deterioration of iron loss. The $[N]_S$ is preferably 0.0055% or less, and more preferably 0.0050% or less.

Note that $[N]_S$ denoting an N content from the surface of the base metal to 20 $\mu$m in the depth direction is measured by the following procedure. First, $[N]_1$, the N content of the non-oriented electrical steel sheet from which the insulation coating has been removed by a heated alkaline solution is measured. Then, both surfaces of the non-oriented electrical steel sheet are removed by chemical polishing to 20 $\mu$m each, and [N]$_2$, the N content of a sample after removal is measured. Then, from the measured [N]$_1$ and [N]$_2$ and the thickness t ($\mu$m) of the non-oriented electrical steel sheet, the [N]s is obtained by the following formula.

$$[N]s = (t \times [N]_1 - (t-40) \times [N]_2)/40$$

### 3. Crystal Grain Size

In the present embodiment, an average crystal grain size of the base metal is to be 50 to 120 $\mu$m. By setting the average crystal grain size of the base metal to 50 $\mu$m or more, it is possible to suppress the deterioration of hysteresis loss and improve the magnetic properties. On the other hand, by setting the average crystal grain size to 120 $\mu$m or less, the effect of improving the strength of steel can be obtained and the deterioration of iron loss due to increased eddy current loss can be suppressed. The average crystal grain size is preferably 60 $\mu$m or more, and more preferably 70 $\mu$m or more. In addition, the average crystal grain size is preferably 110 $\mu$m or less, and more preferably 100 $\mu$m or less.
In the present invention, the average crystal grain size of the base metal shall be determined in accordance with JIS G 0551: 2013 "Steel - Microscopic test methods for grain size".

### 4. Magnetic Properties

In the non-oriented electrical steel sheet according to the present embodiment, the term "excellent magnetic properties" means that the iron loss W$_{10/400}$ is low and the saturation magnetic flux density Bs is high.
Here, the iron loss W$_{10/400}$ means the iron loss caused under the conditions that the maximum magnetic flux density is 1.0 T and the frequency is 400 Hz, and is to be measured according to the Epstein method specified in JIS C 2550-1: 2011. In the present invention, the term "low iron loss W$_{10/400}$" means that the iron loss is 14.5 W/kg or less for a sheet thickness of 0.26 mm or more, 12.5 W/kg or less for a sheet thickness of 0.21 to 0.25 mm, and 11.0 W/kg or less for a sheet thickness of 0.20 mm or less.
The saturation magnetic flux density Bs is measured by vibrating sample magnetometer (VSM). In the non-oriented electrical steel sheet according to the present embodiment, the magnetic flux density Bs is 1.945 T or more regardless of the sheet thickness.

### 5. Mechanical Properties

The non-oriented electrical steel sheet according to the present embodiment has high strength; specifically, the tensile strength is 600 MPa or more. The tensile strength is preferably 605 MPa or more, and more preferably 610 MPa or more. Here, the tensile strength shall be measured by conducting a tensile test according to JIS Z 2241: 2011.

### 6. Sheet Thickness

In the non-oriented electrical steel sheet according to the present embodiment, the sheet thickness is to be 0.10 mm or more from the viewpoint of the producing cost of cold rolling and final annealing. On the other hand, from the viewpoint of iron loss reduction, the sheet thickness is to be 0.30 mm or less. Therefore, the sheet thickness of the non-oriented electrical steel sheet of the present embodiment is 0.10 to 0.30 mm.
The effect of the nitriding of the surface layer of the steel sheet becomes more pronounced the thinner the sheet thickness is. In other words, if the nitriding of the surface layer of the steel sheet is not suppressed, the thinner the sheet thickness, the more deteriorated the iron loss. However, since the present invention suppresses the nitriding of the surface layer of the steel sheet, the deterioration of iron loss can be suppressed even when the sheet thickness is thin. Therefore, when the sheet thickness is, for example, less than 0.25 mm or 0.20 mm or less, the effect of the present invention is more exerted.

### 7. Insulation Coating

In the non-oriented electrical steel sheet according to the present embodiment, it is preferable to provide the surface of the base metal with an insulation coating. Since the non-oriented electrical steel sheets are stacked after core blanks are punched and then used, providing the surface of the base metal with an insulation coating can reduce the eddy current between the sheets, and the eddy current loss as a core can be reduced.
The type of insulation coating is not particularly limited, and any known insulation coating used as an insulation coating for non-oriented electrical steel sheets can be used. As such an insulating coating, for example, a composite insulating coating mainly including an inorganic component and further containing an organic component can be mentioned. Here, for example, the composite insulation coating is an insulation coating mainly including at least one of metal chromate, metal phosphate, or other inorganic compounds such as Zr compounds and Ti compounds, in which fine organic resin particles are dispersed. In particular, from the viewpoint of reducing environmental impacts during producing, which has become increasingly necessary in recent years, insulation coatings using metal phosphates, Zr or Ti coupling agents, or their carbonates or ammonium salts as starting materials are preferably used.

The coating amount of the insulation coating is not particularly limited, but it is preferably about 200 to 1500 mg/m$^2$ per side, for example, and more preferably 300 to 1200 mg/m$^2$ per side. By forming the insulation coating so that the coating amount is within the above range, it is possible to maintain excellent uniformity. In addition, when the coating amount of the insulating coating is measured afterwards, various known measurement methods can be used. For example, a method using the difference in mass before and after immersion in a sodium hydroxide solution or an X-ray fluorescence method using a calibration curve method can be used as appropriate.

8. Producing Method

The non-oriented electrical steel sheet of the present embodiment can be produced by performing a hot rolling process, a pickling process, a batch-type hot-band annealing process, a cold rolling process, and a final annealing process in order under the conditions shown below for a steel ingot having the chemical composition described above. In the case of forming an insulation coating on the surface of the base metal, an insulation coating forming process is performed after the final annealing process described above. Each process is described in detail below.

<Hot Rolling Process>

A steel ingot (slab) having the above chemical composition is heated, and hot rolling is performed on the heated steel ingot to obtain a hot rolled sheet. The heating temperature of the steel ingot for hot rolling is not specified, but for example, 1050 to 1250°C is preferred. The thickness of the hot rolled sheet after hot rolling is also not specified, but is preferably 1.5 to 3.0 mm, for example, considering a final thickness of the base metal.

<Pickling Process>

The above hot rolled sheet is subjected to pickling to remove a scale layer formed on the surface of the base metal. The pickling conditions, such as acid concentration, accelerator concentration, and temperature of pickling solution are not limited and can be any known pickling conditions.

<Batch-Type Hot-Band Annealing Process>

Hot-band annealing is then performed to reduce the iron loss of the steel sheet. Hot-band annealing is performed using a batch-type annealing furnace with a soaking temperature of 650 to 780°C and a soaking time of 8 to 36 hours. By setting the soaking time to 8 hours or more, the metallurgical structure is sufficiently homogenized and the precipitates are coarsened, so that a sufficient improvement in the iron loss can be achieved. On the other hand, if the soaking temperature exceeds 780°C or the soaking time exceeds 36 hours, the crystal grain size becomes coarser and the toughness decreases, resulting in fracture during cold rolling.

The atmosphere in the batch-type annealing furnace is non-oxidizing and can be a mixture of $H_2$ and $N_2$ with a ratio of 1 to 100 volume % $H_2$ (i.e., $H_2 + N_2 = 100$ volume %). Even in an atmosphere containing $N_2$, the nitriding of the base metal surface layer can be suppressed if the Mn and Sn contents are appropriate. However, from the viewpoint of more reliable suppression of the nitriding, it is preferable to use an atmosphere containing 100 volume % $H_2$.

<Cold Rolling Process>

The steel sheet that has undergone the above hot-band annealing is subjected to cold rolling. In cold rolling, the base metal is rolled at a reduction ratio such that the final thickness of the base metal is 0.10 to 0.30 mm.

<Final Annealing Process>

After the above cold rolling, the steel sheet is subjected to final annealing. In the method of producing non-oriented electrical steel sheets according to the present embodiment, it is preferable to use a continuous annealing furnace for the final annealing. The final annealing is performed under the conditions of a soaking temperature of 880 to 1020°C and a soaking time of 1 second to 10 minutes. Preferably, the atmosphere is a mixture of $H_2$ and $N_2$ with a ratio of 1 to 100 volume % $H_2$ (i.e., $H_2 + N_2$ = 100 volume %) and a dew point of -50 to +10°C.

If the soaking temperature is less than 880°C, the crystal grain size becomes finer and the iron loss deteriorates, which is not desirable. If the soaking temperature exceeds 1020°C, not only is the strength insufficient, but the iron loss also deteriorates due to the nitriding of the surface layer, which is not desirable. If the soaking time is less than 1 second, sufficient crystal grain growth is not possible. On the other hand, if the soaking time exceeds 10 minutes, producing cost will increase.

<Insulation Coating Forming Process>

After the final annealing described above, an insulation coating forming process is performed as required. The method of forming an insulation coating is not particularly limited; using the known insulation coating treatment solutions as shown below, the solution can be applied and dried by known methods. As an example of the known insulation coatings, a composite insulation coating mainly including an inorganic component and also containing an organic component can be mentioned.

The composite insulation coating is, for example, an insulation coating mainly including at least one of metal chromate, metal phosphate, or other inorganic compounds such as Zr compounds and Ti compounds, in which fine organic resin particles are dispersed. In particular, from the viewpoint of reducing environmental impacts during producing, which has become increasingly necessary in recent years, insulation coatings using metal phosphates, Zr or Ti coupling agents as a starting material, or those using metal phosphate, carbonate or ammonium salts of phosphates or Zr or Ti coupling agents as starting materials are preferably used.

The surface of the base metal on which the insulation coating is to be formed may be subjected to any pretreatment, such as degreasing with alkali or pickling with hydrochloric, sulfuric, or phosphoric acid, prior to the application of the treatment solution. The surface of the base metal can be coated with the treatment solution in the final annealed condition even without any pretreatment.

The non-oriented electrical steel sheet obtained by the above method has excellent characteristics of high saturation magnetic flux density, low iron loss, and high strength, and is suitable as a material for both rotors and stators.

The invention will be described more specifically by means of the following examples, but the invention is not limited to these examples.

EXAMPLE

Slabs with the chemical compositions shown in Table 1 were heated to 1150°C, hot rolled at a finishing temperature of 850°C to a finishing thickness of 2.0 mm, and coiled at 600°C to obtain hot rolled steel sheets. After pickling to remove scale, the hot rolled steel sheets were hot-band annealed in a batch-type annealing furnace at the soaking temperatures and soaking times shown in Table 2. The resulting steel sheets were cold rolled to a thickness of 0.20 mm. The steel sheets were then final annealed in a mixed atmosphere of $H_2$: 20%, $N_2$: 80% with a dew point of -30°C for a soaking time of 20 seconds at the soaking temperatures shown in Table 2. After final annealing, the steel sheets were coated with an insulation coating consisting of aluminum phosphate and acrylic-styrene copolymer resin emulsion with a particle size of 0.2 $\mu$m and then baked at 350°C in air.

[Table 1]

Table 1

| Steel | Chemical composition (mass%, balance: Fe and impurities) | | | | | | | | | | | | | | | Middle part value of Formula (i)† |
|---|---|---|---|---|---|---|---|---|---|---|---|---|---|---|---|---|
| | C | Si | Mn | P | S | Al | N | Ti | Nb | Zr | V | Cu | Ni | Sn | Sb | |
| A | 0.0025 | 3.80 | 0.15 | 0.014 | 0.0015 | 0.30 | 0.0014 | 0.0012 | 0.0006 | 0.0007 | 0.0002 | 0.029 | 0.018 | 0.031 | tr. | 4.2 |
| B | 0.0026 | 3.80 | 0.25 | 0.015 | 0.0015 | 0.30 | 0.0015 | 0.0013 | 0.0008 | 0.0007 | 0.0016 | 0.030 | 0.020 | 0.030 | tr. | 4.2 |
| C | 0.0020 | 3.90 | 0.35 | 0.013 | 0.0015 | 0.25 | 0.0015 | 0.0012 | 0.0009 | 0.0006 | 0.0005 | 0.031 | 0.035 | 0.029 | 0.002 | 4.3 |
| D | 0.0021 | 3.90 | 0.35 | 0.012 | 0.0019 | 0.25 | 0.0014 | 0.0013 | 0.0007 | 0.0004 | tr. | 0.028 | 0.034 | 0.030 | 0.003 | 4.3 |
| E | 0.0018 | 3.86 | 0.42 | 0.013 | 0.0004 | 0.51 | 0.0013 | 0.0016 | 0.0006 | 0.0004 | 0.0006 | 0.022 | 0.019 | 0.003 | tr. | 4.6 |
| F | 0.0022 | 3.87 | 0.43 | 0.015 | 0.0004 | 0.52 | 0.0015 | 0.0015 | 0.0007 | 0.0011 | 0.0009 | 0.007 | 0.019 | 0.006 | 0.013 | 4.6 |
| G | 0.0029 | 4.20 | 0.30 | 0.015 | 0.0005 | 0.40 | 0.0017 | 0.0010 | 0.0014 | 0.0006 | 0.0009 | 0.009 | 0.005 | 0.035 | 0.004 | 4.8 |
| H | 0.0024 | 4.20 | 0.30 | 0.014 | 0.0005 | 0.40 | 0.0010 | 0.0012 | 0.0016 | 0.0006 | 0.0009 | 0.005 | 0.005 | 0.046 | 0.003 | 4.8 |
| I | 0.0023 | 4.11 | 0.45 | 0.020 | 0.0005 | 0.36 | 0.0010 | 0.0014 | 0.0014 | 0.0005 | tr. | 0.006 | 0.006 | 0.010 | 0.001 | 4.7 |
| J | 0.0025 | 4.10 | 0.55 | 0.019 | 0.0005 | 0.38 | 0.0017 | 0.0014 | 0.0015 | 0.0004 | tr. | 0.006 | 0.006 | 0.007 | 0.001 | 4.8 |
| K | 0.0036 | 4.50 | 0.26 | 0.008 | 0.0010 | 0.25 | 0.0008 | 0.0007 | 0.0004 | 0.0005 | 0.0006 | 0.005 | 0.011 | 0.010 | 0.001 | 4.9 |
| L | 0.0026 | 4.50 | 0.36 | 0.008 | 0.0010 | 0.35 | 0.0015 | 0.0012 | 0.0006 | tr. | 0.0006 | 0.005 | 0.013 | 0.010 | 0.001 | 5.0 |
| M | 0.0020 | 4.72 | 0.30 | 0.012 | 0.0010 | 0.30 | 0.0013 | 0.0012 | 0.0006 | tr. | 0.0006 | 0.006 | 0.018 | 0.010 | 0.005 | 5.2 |
| N | 0.0016 | 4.02 | 0.30 | 0.016 | 0.0011 | 0.33 | 0.0012 | 0.0017 | 0.0006 | 0.0005 | 0.0004 | 0.012 | 0.018 | 0.030 | 0.005 | 4.5 |
| O | 0.0028 | 3.93 | 0.39 | 0.018 | 0.0006 | 0.29 | 0.0014 | 0.0014 | 0.0005 | 0.0005 | 0.0003 | 0.013 | 0.019 | 0.010 | 0.004 | 4.4 |
| P | 0.0025 | 3.70 | 0.30 | 0.015 | 0.0008 | 0.35 | 0.0012 | 0.0013 | 0.0005 | 0.0005 | 0.0003 | 0.012 | 0.021 | 0.026 | 0.003 | 4.2 |
| Q | 0.0030 | 3.80 | 0.21 | 0.016 | 0.0008 | 0.23 | 0.0014 | 0.0014 | 0.0008 | 0.0007 | 0.0005 | 0.014 | 0.022 | 0.026 | 0.002 | 4.1 |
| R | 0.0029 | 3.95 | 0.23 | 0.016 | 0.0010 | 0.20 | 0.0015 | 0.0012 | 0.0008 | 0.0007 | 0.0005 | 0.012 | 0.018 | 0.035 | 0.003 | 4.3 |
| S | 0.0010 | 3.78 | 0.25 | 0.025 | 0.0010 | 0.48 | 0.0018 | 0.0013 | 0.0010 | 0.0046 | 0.0041 | 0.019 | 0.016 | 0.018 | 0.008 | 4.4 |
| T | 0.0032 | 3.80 | 0.32 | 0.009 | 0.0010 | 0.69 | 0.0020 | 0.0010 | 0.0007 | 0.0005 | 0.0007 | 0.018 | 0.019 | 0.024 | tr. | 4.7 |
| U | 0.0026 | 3.95 | 0.23 | 0.010 | 0.0010 | 0.77 | 0.0020 | 0.0010 | 0.0006 | 0.0004 | 0.0007 | 0.018 | 0.018 | 0.025 | tr. | 4.8 |
| V | 0.0011 | 3.81 | 0.41 | 0.008 | 0.0009 | 0.62 | 0.0032 | 0.0009 | 0.0042 | 0.0012 | 0.0015 | 0.153 | 0.203 | 0.015 | 0.002 | 4.6 |
| W | 0.0008 | 3.80 | 0.26 | 0.016 | 0.0007 | 0.71 | 0.0011 | 0.0036 | 0.0018 | 0.0012 | 0.0019 | 0.181 | 0.410 | 0.015 | tr. | 4.6 |

(continued)

| Steel | Chemical composition (mass%, balance: Fe and impurities) | | | | | | | | | | | | | | | Middle part value of Formula (i)† |
|---|---|---|---|---|---|---|---|---|---|---|---|---|---|---|---|---|
| | C | Si | Mn | P | S | Al | N | Ti | Nb | Zr | V | Cu | Ni | Sn | Sb | |
| <u>X</u> | 0.0025 | 3.95 | 0.25 | 0.002 | 0.0012 | <u>0.22</u> | 0.0015 | 0.0010 | 0.019 | 0.0006 | 0.0008 | 0.017 | 0.020 | 0.024 | 0.001 | 4.3 |

† $4.2 \leq Si+Al+0.5 \times Mn < 4.9$ ...(i)
"tr." indicates that value is measurement limit or lower.
Underline indicates that value is outside of range of the present invention.

[Table 2]

[Table 2]

Table 2

| Test No. | Steel | Hot-band annealing | | Final annealing | [N]s (mass%) | Average crystal grain size (μm) | Tensile strength (MPa) | $W_{10/400}$ (W/kg) | Bs (T) | Remarks |
|---|---|---|---|---|---|---|---|---|---|---|
| | | Soaking temperature (°C) | Soaking time (h) | Soaking temperature (°C) | | | | | | |
| 1 | A | 750 | 10 | 1000 | 0.0029 | 52 | 610 | 11.8 | 1.979 | Comparative example |
| 2 | B | 750 | 10 | 1000 | 0.0027 | 62 | 604 | 10.9 | 1.977 | Inventive example |
| 3 | C | 750 | 10 | 1000 | 0.0029 | 69 | 612 | 10.4 | 1.974 | Inventive example |
| 4 | D | 750 | 10 | 1000 | 0.0027 | 57 | 619 | 11.5 | 1.974 | Comparative example |
| 5 | E | 710 | 10 | 1000 | 0.0078 | 102 | 604 | 11.3 | 1.960 | Comparative example |
| 6 | F | 710 | 10 | 1000 | 0.0033 | 100 | 606 | 10.0 | 1.959 | Inventive example |
| 7 | G | 710 | 10 | 1000 | 0.0025 | 95 | 643 | 9.8 | 1.954 | Inventive example |
| 8 | H | 710 | 10 | Fracture during cold rolling | | | | | | Comparative example |
| 9 | I | 730 | 10 | 1000 | 0.0051 | 105 | 629 | 9.8 | 1.957 | Inventive example |
| 10 | J | 730 | 10 | 1000 | 0.0069 | 95 | 632 | 11.1 | 1.954 | Comparative example |
| 11 | K | 680 | 10 | 1000 | 0.0035 | 80 | 679 | 10.0 | 1.951 | Inventive example |
| 12 | L | 680 | 10 | 1000 | 0.0040 | 85 | 682 | 10.5 | 1.943 | Comparative example |
| 13 | M | 680 | 10 | Fracture during cold rolling | | | | | | Comparative example |
| 14 | N | 820 | 10 | Fracture during cold rolling | | | | | | Comparative example |
| 15 | N | 780 | 10 | 1000 | 0.0032 | 80 | 624 | 10.1 | 1.965 | Inventive example |
| 16 | N | 750 | 10 | 1000 | 0.0033 | 75 | 626 | 10.3 | 1.965 | Inventive example |
| 17 | N | 700 | 10 | 1000 | 0.0030 | 68 | 629 | 10.5 | 1.965 | Inventive example |
| 18 | N | 640 | 10 | 1000 | 0.0031 | 48 | 643 | 11.8 | 1.965 | Comparative example |
| 19 | O | 700 | 10 | 870 | 0.0025 | 45 | 634 | 12.2 | 1.970 | Comparative example |
| 20 | O | 700 | 10 | 950 | 0.0030 | 70 | 617 | 10.3 | 1.970 | Inventive example |
| 21 | O | 700 | 10 | 1000 | 0.0045 | 100 | 605 | 10.0 | 1,970 | Inventive example |
| 22 | O | 700 | 10 | 1050 | 0.0096 | 125 | 599 | 11.1 | 1.970 | Comparative example |
| 23 | P | 750 | 10 | 950 | 0.0030 | 65 | 593 | 11.0 | 1.978 | Comparative example |
| 24 | Q | 750 | 10 | 950 | 0.0035 | 65 | 600 | 11.2 | 1.982 | Comparative example |

(continued)

| Test No. | Steel | Hot-band annealing | | Final annealing | [N]s (mass%) | Average crystal grain size (μm) | Tensile strength (MPa) | $W_{10/400}$ (W/kg) | Bs (T) | Remarks |
|---|---|---|---|---|---|---|---|---|---|---|
| | | Soaking temperature (°C) | Soaking time (h) | Soaking temperature (°C) | | | | | | |
| 25 | R | 720 | 10 | 1000 | 0.0028 | 48 | 629 | 12.0 | 1.977 | Comparative example |
| 26 | S | 720 | 10 | 1000 | 0.0025 | 75 | 601 | 10.2 | 1.968 | Inventive example |
| 27 | T | 720 | 10 | 1000 | 0.0035 | 85 | 607 | 10.0 | 1.954 | Inventive example |
| 28 | U | 720 | 10 | Fracture during cold rolling | | | | | | Comparative example |
| 29 | v | 720 | 10 | 980 | 0.0039 | 80 | 612 | 10.3 | 1.953 | Inventive example |
| 30 | W | 720 | 10 | 980 | 0.0041 | 78 | 614 | 10.5 | 1.951 | Inventive example |
| 31 | w | 780 | 38 | Fracture during cold rolling | | | | | | Comparative example |
| 32 | W | 800 | 10 | Fracture during cold rolling | | | | | | Comparative example |
| 33 | X | 720 | 10 | 980 | 0.0029 | 52 | 630 | 11.5 | 1.975 | Comparative example |

Underline indicates that value is outside of range of the present invention.

For each sample obtained, the average crystal grain size was measured in the cross section parallel to the rolling direction of the base metal in accordance with JIS G 0551: 2013 "Steel - Microscopic test method for grain size". Epstein test specimens were taken from the rolling direction and the width direction of each sample, and the iron loss $W_{10/400}$ was evaluated by the Epstein test in accordance with JIS C 2550-1:2011. The saturation magnetic flux density was measured by vibrating sample magnetometer (VSM).

Then, in accordance with JIS Z 2241:2011, JIS No. 5 tensile test specimens were taken from each sample so that the longitudinal direction matched the rolling direction of the steel sheet. The above test specimens were then subjected to a tensile test in accordance with JIS Z 2241:2011 to measure tensile strength.

In addition, [N]s denoting an N content from the surface of the base metal to 20 μm in the depth direction was measured by the following procedure. First, $[N]_1$, the N content of a non-oriented electrical steel sheet from which the insulation coating was removed by a heated alkaline solution, was measured. Then, both surfaces of the non-oriented electrical steel sheet were removed by chemical polishing to 20 μm each, and $[N]_2$, the N content of the sample after removal, was measured. Then, the [N]s was obtained from the measured $[N]_1$ and $[N]_2$, and the thickness t (μm) of the non-oriented electrical steel sheet using the following formula.

$$[N]s = (t \times [N]_1 - (t-40) \times [N]_2)/40$$

The above results are shown in Table 2.

Test Nos. 2, 3, 6, 7, 9, 11, 15 to 17, 20, 21, 26, 27, 29, and 30 satisfying the requirements of the present invention were found to have low iron loss, high saturation flux density, and high tensile strength of 600 MPa or more.

In contrast, the comparative examples, Test Nos. 1, 4, 5, 8, 10, 12 to 14, 18, 19, 22 to 25, 28, and 31 to 33 had either inferior iron loss $W_{10/400}$, inferior saturation magnetic flux density, or significantly reduced toughness which made them difficult to produce.

Specifically, in Test No. 1, the Mn content was lower than the specified range, resulting in inferior iron loss due to a large amount of fine MnS precipitates. In Test No. 4, the S content was higher than the specified range, resulting in inferior iron loss due to a large amount of MnS precipitates. In Test No. 5, the Sn content was lower than the specified range, resulting in inferior iron loss due to its higher [N]s. In Test No. 8, the Sn content was higher than the specified range, which reduced the toughness and resulted in fracture during cold rolling, making it impossible to measure the tensile strength and magnetic properties.

In Test No. 10, the Mn content was higher than the specified range, resulting in inferior iron loss due to higher [N]s. In Test No. 12, the saturation magnetic flux density was inferior because Si + Al + 0.5 × Mn was higher than the specified range. In Test No. 13, the Si content and Si + Al + 0.5 × Mn were higher than the specified ranges, which caused the toughness to deteriorate, resulting in fracture during cold rolling and making it impossible to measure the tensile strength and magnetic properties.

In Test No. 14, the annealing temperature of the hot-band annealing was higher than the specified range, resulting in fracture during cold rolling due to toughness degradation, making it impossible to measure the tensile strength and magnetic properties. In Test No. 18, the temperature of the hot-band annealing was lower than the specified range, resulting in inferior iron loss due to a smaller average crystal grain size after final annealing than the specified range. In Test No. 19, the final annealing temperature was lower than the specified range, resulting in inferior iron loss due to a smaller average crystal grain size than the specified range. In Test No. 22, the final annealing temperature was higher than the specified range, the average crystal grain size was larger than the specified range, and the [N]s was higher than the specified range, resulting in inferior iron loss and inferior strength.

In Test No. 23, the Si content was lower than the specified range, resulting in inferior tensile strength. In Test No. 24, Si + Al + 0.5 × Mn was lower than the specified range, resulting in inferior iron loss. In addition, in Test No. 25, the average crystal grain size after final annealing was smaller than the specified range because the Al content was lower than the specified range, resulting in inferior iron loss. In Test No. 28, the Al content was higher than the specified range, resulting in toughness deterioration and fracture during cold rolling, making it impossible to measure the tensile strength and magnetic properties.

In Test No. 31, the soaking time of hot-band annealing was longer than the specified range, which caused the toughness to deteriorate due to coarsening of the crystal grain size, resulting in fracture during cold rolling, making it impossible to measure the tensile strength and magnetic properties. In Test No. 32, the soaking temperature of the hot-band annealing process was higher than the specified range, and the toughness deteriorated due to coarsening of the crystal grain size, resulting in fracture during cold rolling, making it impossible to measure the tensile strength and magnetic properties. In Test No. 33, the Al content was lower than the specified range, resulting in inferior iron loss due to deterioration of the texture and precipitation of fine AlN.

INDUSTRIAL APLICABILITY

As described above, the present invention makes it possible to obtain a non-oriented electrical steel sheet with high strength and excellent magnetic properties at low cost.

**Claims**

1. A non-oriented electrical steel sheet comprising a base metal having a chemical composition containing, by mass %,

C: 0.0050% or less,
Si: more than 3.70% and 4.60% or less,
Mn: more than 0.20% and 0.50% or less,
Al: 0.23 to 0.75%,
P: 0.030% or less,
S: 0.0018% or less,
N: 0.0040% or less,
Ti: less than 0.0050%,
Nb: less than 0.0050%,
Zr: less than 0.0050%,
V: less than 0.0050%,
Cu: less than 0.200%,
Ni: less than 0.500%,
Sn: 0.005 to 0.040%, and
Sb: 0 to 0.040%,
with a balance of Fe and impurities, and
satisfying the Formula (i) below, wherein:

$[N]s$, an N content from a surface to 20 $\mu$m in depth of the base metal, is 0.0060% or less,
an average crystal grain size of the base metal is 50 to 120 $\mu$m,
a saturation magnetic flux density is 1.945T or more,
a tensile strength is 600 MPa or more, and
a sheet thickness is 0.10 to 0.30 mm:

$$4.2 \leq Si + Al + 0.5 \times Mn \leq 4.9 \ldots (i)$$

where, element symbols in the above Formula (i) represent contents (by mass %) of each element.

2. The non-oriented electrical steel sheet according to claim 1, wherein the steel sheet comprises an insulation coating on a surface of the base metal.

3. A method for producing the non-oriented electrical steel sheet according to claim 1 or claim 2,
the method comprising:

a hot rolling process,
a pickling process,
a batch-type hot-band annealing process performed at a soaking temperature of 650 to 780°C for a soaking time of 8 to 36 hours,
a cold rolling process to reduce a sheet thickness to 0.10 to 0.30 mm, and
a final annealing process at a soaking temperature of 880 to 1020°C for a soaking time of 1 second to 10 minutes,
wherein the hot rolling process, the pickling process, the hot-band annealing process, the cold rolling process, and the final annealing process are sequentially performed on a steel ingot having a chemical composition containing, by mass %,
C: 0.0050% or less,
Si: more than 3.70% and 4.60% or less,
Mn: more than 0.20% and 0.50% or less,
Al: 0.23 to 0.75%,

P: 0.030% or less,
S: 0.0018% or less,
N: 0.0040% or less,
Ti: less than 0.0050%,
Nb: less than 0.0050%,
Zr: less than 0.0050%,
V: less than 0.0050%,
Cu: less than 0.200%,
Ni: less than 0.500%,
Sn: 0.005 to 0.040%, and
Sb: 0 to 0.040%,
with a balance of Fe and impurities, and
satisfying the Formula (i) below:

$$4.2 \leq \mathrm{Si} + \mathrm{Al} + 0.5 \times \mathrm{Mn} \leq 4.9 \ .... \ (\mathrm{i})$$

where, element symbols in the above formula represent contents (mass %) of each element.

## INTERNATIONAL SEARCH REPORT

International application No.

**PCT/JP2023/009983**

### A. CLASSIFICATION OF SUBJECT MATTER

*C21D 8/12*(2006.01)i; *C22C 38/00*(2006.01)i; *C22C 38/60*(2006.01)i; *H01F 1/147*(2006.01)i
FI: C22C38/00 303U; C22C38/60; C21D8/12 A; H01F1/147 183

According to International Patent Classification (IPC) or to both national classification and IPC

### B. FIELDS SEARCHED

Minimum documentation searched (classification system followed by classification symbols)

C21D8/12; C21D9/46; C22C38/00-C22C38/60; H01F1/147

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2020/136993 A1 (JFE STEEL CORPORATION) 02 July 2020 (2020-07-02) claims, paragraphs [0015], [0048]-[0049], tables 1-1, 2-1, steel no. 20 | 1-3 |
| A | WO 2020/166718 A1 (NIPPON STEEL CORPORATION) 20 August 2020 (2020-08-20) entire text, all drawings | 1-3 |
| A | WO 2018/025941 A1 (NIPPON STEEL & SUMITOMO METAL CORPORATION) 08 February 2018 (2018-02-08) entire text, all drawings | 1-3 |
| A | JP 2011-246810 A (JFE STEEL CORPORATION) 08 December 2011 (2011-12-08) entire text, all drawings | 1-3 |
| A | JP 2000-256751 A (NKK CORPORATION) 19 September 2000 (2000-09-19) entire text, all drawings | 1-3 |
| A | KR 10-2021-0079545 A (POSCO) 30 June 2021 (2021-06-30) entire text, all drawings | 1-3 |

☑ Further documents are listed in the continuation of Box C.     ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **05 June 2023** | **13 June 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**EP 4 495 276 A1**

<table>
<tr><td colspan="2" align="center">INTERNATIONAL SEARCH REPORT</td><td>International application No.<br>**PCT/JP2023/009983**</td></tr>
</table>

| C. | DOCUMENTS CONSIDERED TO BE RELEVANT | |
|---|---|---|
| Category* | Citation of document, with indication, where appropriate, of the relevant passages | Relevant to claim No. |
| A | KR 10-2021-0080726 A (POSCO) 01 July 2021 (2021-07-01)<br>entire text, all drawings | 1-3 |

Form PCT/ISA/210 (second sheet) (January 2015)

## INTERNATIONAL SEARCH REPORT
### Information on patent family members

| | International application No. |
|---|---|
| | PCT/JP2023/009983 |

| Patent document cited in search report | Publication date (day/month/year) | Patent family member(s) | Publication date (day/month/year) |
|---|---|---|---|
| WO 2020/136993 A1 | 02 July 2020 | US 2022/0056548 A1<br>claims, paragraphs [0024],<br>[0087]-[0089], tables 1-1, 2-1,<br>steel no. 20<br>EP 3904551 A1<br>TW 202024352 A<br>KR 10-2021-0082516 A<br>CN 113166869 A<br>CA 3122122 A1 | |
| WO 2020/166718 A1 | 20 August 2020 | US 2022/0186330 A1<br>entire text, all drawings<br>EP 3926060 A1<br>TW 202035710 A<br>KR 10-2021-0112365 A<br>CN 113474472 A | |
| WO 2018/025941 A1 | 08 February 2018 | US 2019/0228891 A1<br>entire text, all drawings<br>EP 3495525 A1<br>TW 201812051 A<br>KR 10-2019-0003783 A<br>CN 109563583 A<br>BR 112018075826 A2<br>PL 3495525 T3<br>RS 63177 B1 | |
| JP 2011-246810 A | 08 December 2011 | (Family: none) | |
| JP 2000-256751 A | 19 September 2000 | (Family: none) | |
| KR 10-2021-0079545 A | 30 June 2021 | US 2023/0021153 A1<br>entire text, all drawings<br>JP 2023-507436 A<br>WO 2021/125683 A2<br>EP 4079889 A2<br>CN 115003844 A | |
| KR 10-2021-0080726 A | 01 July 2021 | US 2023/0025678 A1<br>entire text, all drawings<br>JP 2023-507777 A<br>WO 2021/125855 A2<br>EP 4079887 A2<br>CN 115176044 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019017426 A1
- WO 2020091039 A1
- WO 2020091043 A1
- JP 2010090474 A